# EUROPEAN PATENT SPECIFICATION

(11) **EP 1 187 411 B1**
(45) Date of publication and mention of the grant of the patent: **19.12.2007**
(21) Application number: 01000420.8
(22) Date of filing: 04.09.2001
(51) Int. Cl.: H04L 27/00

(54) **Monolithic ADSL analogue front end**
Monolitisch integriertes ADSL-Analog Front End
Front-end analogique monolithique pour ADSL

(30) Priority: 05.09.2000 US 654863
(43) Date of publication of application: 13.03.2002
(73) Proprietor: Texas Instruments Incorporated, Dallas, TX 75251 (US)
(72) Inventor: Agah, Michael D., Monte Sereno, CA 95030 (US); Corsi, Marco, Allen, TX 75002 (US); Hester, Richard K., McKinney, TX 75070 (US); Quarfoot, James D., Richardson, TX 75081 (US); McClean, Kenneth G., Dallas, TX 75206 (US)
(74) Representative: Holt, Michael

(56) References cited:
- HESTER R ET AL: "Codec for echo-canceling, full-rate ADSL modems" SOLID-STATE CIRCUITS CONFERENCE, 1999. DIGEST OF TECHNICAL PAPERS. ISSCC. 1999 IEEE INTERNATIONAL SAN FRANCISCO, CA, USA 15-17 FEB. 1999, PISCATAWAY, NJ, USA,IEEE, US, vol. 34, 15 February 1999 (1999-02-15), pages 1973-1985, XP010329766 SAN FRANCISCO ISBN: 0-7803-5126-6

## Description

### Technical Field of the Invention

This invention relates generally to asymmetric digital subscriber lines (ADSL), and more particularly to a monolithic ADSL analog front end.

### Description of the Prior Art

Asymmetric digital subscriber lines (ADSL) can supply the necessary bandwidth for applications such as fast access to the Internet, video conferencing, interactive multimedia, and Video-on-Demand. This technology is designed to solve the most severe bottleneck in the data access network between the Central Office and the customer, or end-user.

ADSL is a new modem technology that converts existing copper telephone lines into access paths for multimedia and high-speed data communications, and maintains the regular telephone voice services. ADSL provides data rates that expand the best existing access capacity (i.e., ISDN) by a factor of 60 or more, and the best existing common analog access capacity (i.e., V.34 modems) by a factor of 300, without requiring any new cabling. ADSL can practically transform the existing public information network from one limited to voice, text and low resolution graphics to a powerful, ubiquitous system capable of carrying multimedia, including full motion video, to everyone's home.

Rate adaptive ADSL delivers any data rate from 64kbps to 8.192Mbps on the downstream channels to the subscribers and any data rates from 16kbps to 768kbps on the upstream channels back to the network, while simultaneously providing lifeline POTS (Plain Old Telephone Service), all over a single twisted copper wire pair. The downstream and upstream channels can be split into several sub-channels (up to 4 sub-channels on the downstream and 3 bi-directional sub-channels) to serve several applications simultaneously.

The ADSL operates over a single, unconditioned twisted copper pair of wires. Its connection is via modem pairs, one at the user end and the second at the Central Office.

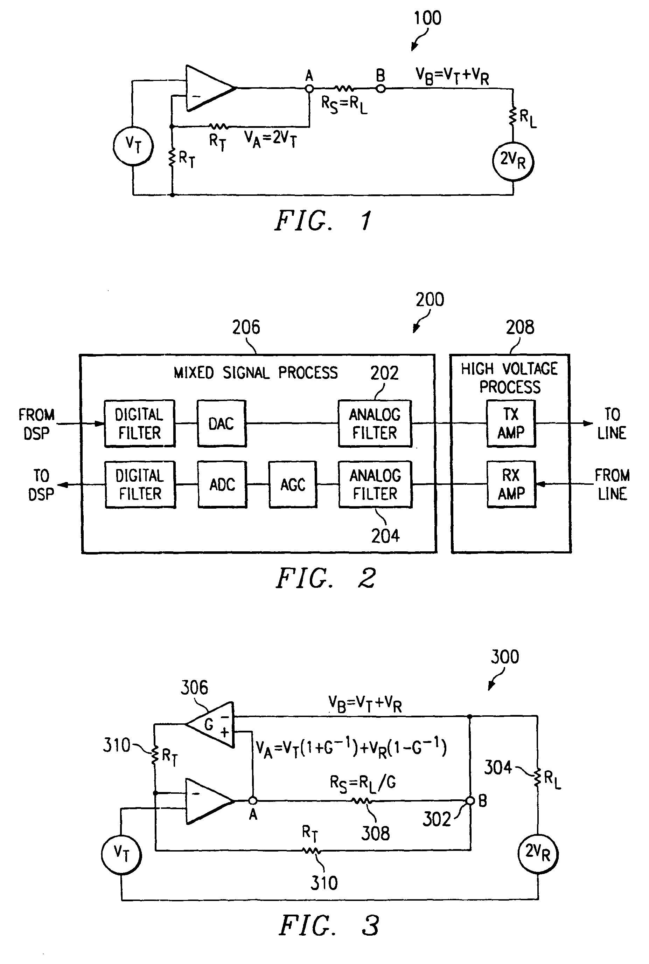

A common strategy for implementing ADSL modem technology is to ensure that the input impedance of an analog front end (AFE), looking into the subscriber loop port, matches the loop characteristic impedance. This has traditionally been accomplished by placing a network that closely matches the loop characteristic impedance between the AFE line driver output and the subscriber loop (or transformer coupling to the subscriber loop). A single-ended version of this scheme is shown in Figure 1. A disadvantage associated with such schemes is that half of the line driver output signal power is dissipated on this terminating network.

Another problem associated with the AFE concerns IC fabrication processes that are generally optimized for mixed signal circuits, and are not therefore compatible with the large voltage swings encountered on the subscriber loop. A common way to remedy this problem is to implement virtually all of the required data conversion and filter functions on the low voltage process and then amplify or attenuate the signal as required to connect to the subscriber line using a high-voltage analog process technology such as shown in Figure 2. Circuits implemented in the low voltage process must have very low noise. They are therefore large and consume excessive power to eliminate the undesirable noise.

An example is disclosed in document HESTER R ET Al.: "Codec for echo-cancelling, full-rate ADSL modems". IEEE Journal of Solid-State circuits, vol. 34, No. 12 pages 1973-1985, December 1999.

In view of the foregoing, a need exists for an ADSL analog front end that uses less power than known asymmetric digital subscriber loop AFE architectures.

### Summary of the Invention

The present invention is directed to synthesized impedance AFE IC for ADSL applications and that includes the transmitter line driver, receiver and analog transmitter and receiver filters implemented in a common high voltage process. The AFE is partitioned in such a way that allows a reduction in die area and power dissipation of the analog filters over known AFE architectures that implement the analog filters in a low voltage process in order to reduce noise generated in the filters. The present AFE uses synthesized impedance to implement the transmitter line driver. This reduces the power dissipation of the line driver. The active current sensing impedance associated with the line driver is importantly scaled which results in less power wasted on the loop current sensing resistor for a given loop current. This effectively lowers the line driver output voltage and translates to a reduction in the line driver power supply voltage resulting in a substantially reduced line driver noise gain. Since the line driver noise gain is substantially reduced, the AFE analog filters can be implemented along with the line driver in the high voltage process instead of the more conventional low voltage process commonly employed in the prior art. This allows the analog filters to employ smaller filtering components having a higher noise floor, since the filter noise is no longer substantially amplified by the line driver.

In one aspect of the invention, a monolithic ADSL analog front end is implemented that has the line driver, receiver and analog transmitter and receiver filters implemented in a high voltage process.

In another aspect of the invention, a monolithic ADSL analog front end is implemented using an active termination circuit to synthesize the line driver source impedance.

In yet another aspect of the invention, a monolithic ADSL analog front end is implemented to substantially reduce die area and power dissipation associated with the analog filters.

In still another aspect of the invention, a monolithic ADSL analog front end is implemented such that noise generated by the transmitter analog filter is not amplified.

In still another aspect of the invention, a monolithic ADSL analog front end has a receiver analog filter implemented in a high voltage process allowing an increase in the noise floor to reduce power dissipation and die area requirements.

### Brief Description of the Drawings

For a more complete understanding of the present invention, and the advantages thereof, reference is now made to the following detailed description and the features and aspects thereof, by way of example only, and with reference to the figures of the accompanying drawings in which:
Figure 1 is a schematic diagram illustrating a traditional passively terminated line driver circuit;
Figure 2 illustrates a common technology strategy for implementing an ADSL analog front end;
Figure 3 is a schematic diagram illustrating an active termination line driver circuit;
Figure 4 is a schematic diagram illustrating a receiver amplifier circuit using passive elements around the receive amplifier to achieve high 4-wire echo return loss;
Figure 5 is a functional diagram illustrating an ADSL analog front end that has been repartitioned according to an example of the present invention; and
Figure 6 is a block diagram illustrating an analog front end circuit that is partitioned according to the inventive principles presented herein according to an example of the present invention.

### Detailed Description of the Preferred Embodiments

Figure 1 is a schematic diagram illustrating a traditional passively terminated line driver circuit 100. Such passively terminated line driver circuits 100 have traditionally been employed in hybrid circuits used to interface the four-wire signal path (two wires each from DAC and to ADC) to the bi-directional two-wire path (subscriber loop). The line driver circuit 100 ensures that the input impedance of the hybrid, looking into the subscriber loop port, matches the loop characteristic impedance. This line driver circuit 100 undesirably causes half of the line driver output signal power to be dissipated in the terminating network.

Figure 2 illustrates a common technology strategy for implementing an ADSL analog front end (AFE) 200. The AFE 200 architecture is not optimised for mixed signal circuits that are incompatible with the large voltage swings encountered on the subscriber loop. Instead, all of the required data conversion and analog filter 202, 204 functions are implemented on the low-voltage mixed signal process 206. Signals are amplified or attenuated as required to connect the AFE 200 to the subscriber line using a high-voltage analog process technology 208. This architecture is undesirable for ADSL applications since circuits implemented in the low-voltage technology 206 must have very low noise, and therefore are large and consume excessive power.

Figure 3 is a schematic diagram illustrating an active termination line driver circuit 300. The line driver circuit 300 demonstrates a single-ended technique for achieving impedance matching to the subscriber loop using synthesized impedance. Node B 302 represents the end of the subscriber loop (or equivalently, the input to the loop-coupling transformer, not shown), where the impedance of the subscriber loop is represented by R_{L} 304. The amplifier 306 with gain, G, amplifies the voltage drop across the loop current sensing resistor, R_{S} 308. Because R_{T} 310 >> R_{S} 308, the equal resistors R_{T} 310 and the high gain of the line driver amplifier 306 forces V_{B} = 2V_{T}-V_{S} = 2V_{T}-GR_{S}I, where I represent the loop current. The termination impedance is expressed as Z_{IN} = -dV_{B}/dI = GR_{S}, and the loop impedance matching condition is GR_{S} = R_{L} 304. The feedback network in the active termination circuit 300 therefore creates an effective termination equal to the current sense resistance, R_{S} 308, multiplied by the feedback amplifier 306 gain.

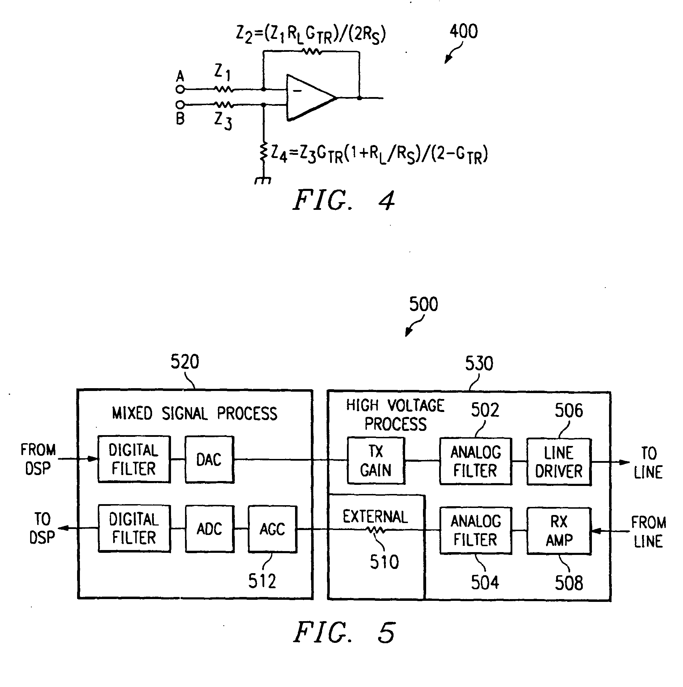

Scaling the terminating impedance is important because for a given loop current, less power is wasted on resistor, R_{S} 308. This means that the line driver output voltage is lower. When V_{R} = 0, in order to deliver signal V_{T} to the loop, the traditional line driver 100 shown in Figure 1 must provide 2V_{T}, whereas only V_{T}(1+G⁻¹) is required of the actively terminated line driver 300. Thus, the power wasted in the termination network (R_{S}) is reduced by a factor of G. This translates to a reduction in the line driver power supply voltage and consequently a reduction in the power consumed by the line driver. The present inventors recognized the important ramifications that the foregoing described characteristics have on process technology choices regarding a monolithic ADSL analog font end that includes a line driver, receiver and analog transmitter and receiver filters discussed herein below with reference to Figure 5.

The foregoing argument for impedance synthesis is certainly valid for small V_{R}, but there are environments where the receiver signal, V_{R}, is not negligible, such as for example, on short subscriber loops. A power reduction procedure is fortunately prescribed for short loops. Consequently, where the receiver power is high, the transmitter power is reduced. The maximum signal that the line driver amplifier 306 is only slightly greater than V_{T}(1+G⁻¹), so a substantial reduction in line driver power supply voltage and power consumption is obtained.

A monolithic ADSL analog front end used to interface the four-wire signal path to the bi-directional two-wire path is required to have low 4-wire (tx) to 2-wire insertion loss, low 2-wire to 4-wire (rx) insertion loss, high 4-wire (tx) to 4-wire (rx) echo return loss, and high 2-wire echo return loss. High 2-wire echo return loss is achieved when the effective driver impedance is matched to the loop impedance. High 4-wire echo return loss requires a hybrid circuit that forms the linear combination of V_{A} and V_{B} such that the portion of the signal due to V_{T} is eliminated. When either the passively or actively terminated drivers are employed, the correct linear combination is V_{RX} = G_{RX} ((R_{L}*V_{A})/(R_{S} + R_{L}) - V_{B}) = -2G_{RX}R_{S/}(R_{S} + R_{L}), where G_{RX} represents the receiver amplifier gain. Since R_{S} is G times smaller when active termination is employed, G_{RX} used for active termination must be G times that used for passive termination to produce the same V_{RX}. This requirement was found by the present inventors to be the only apparent disadvantage of active termination, since it means that the receiver amplifier input-referred noise must be G times lower in order to provide the same receiver dynamic range as achieved with a passively terminated driver.

Figure 4 is a schematic diagram illustrating a receiver amplifier circuit 400 using passive elements around the receive amplifier to achieve high 4-wire echo return loss. The amplifier circuit 400 is an alternative to the traditional hybrid circuit. The amplifier circuit 400 realizes the echo return loss linear combination using the passive elements around the receive amplifier to enable a reduction in the number of passive components.

The present inventors recognized that the features described herein above could be implemented to realize a monolithic ADSL analog front end (AFE) functional architecture that is partitioned to provide a hybrid that requires substantially less die area and power dissipation than known architectures using mixed signal circuits such as shown in Figure 2. Figure 5 is a functional block diagram illustrating an ADSL analog front end 500 that has been repartitioned according to one example of the present invention in order to minimize power dissipation and to minimize IC die area requirements. The foregoing repartitioning can be seen to be implemented using functional blocks, including analog transmitter and receive filters 502, 504, a transmitter line driver 506 and a receiver amplifier 508. When the line driver 506 is implemented using synthesized impedance techniques as described above, the line driver 506 gain is substantially reduced such that a substantial reduction is noise gain is also achieved (in some schemes, the line driver gain can be nominally 0dB). The noise contributed by the transmitter analog filter 502 is therefore not amplified. This feature allows the transmitter analog filter 502 to be repartitioned differently than that required by traditional partitioning, since the noise floor of the transmitter analog filter 502 can now be higher. Since the noise floor can be higher, smaller components can be used to implement the filter 502, with a resulting reduction in hybrid die area and power dissipation. A similar argument applies to the receive analog filter 504. According to one example, moving the receive analog filter 504 to the high voltage process was found to allow an increase in its noise floor of approximately 17.5dB. As stated herein before, the traditional approach disclosed in the prior art partitions the functions such that virtually all of the required data conversion and filter functions are implemented on the low-voltage process. Signals are then amplified or attenuated as required to connect to the subscriber line using a high-voltage analog process technology. The familiar approach used in the prior art requires circuits that are large and that consume undesirably excessive amounts of power in order to eliminate noise that caused by implementing the circuits on the low-voltage process. Looking again at Figure 5, an external resistor 510 forms part of the variable gain amplifier portion of the AGC 512 and operates to isolate the mixed signal process 520 from the high voltage process 530. According to one example, the AGC 512 setting is chosen such that its output is as close as possible to 3Vpp to implement the ADSL analog front end 500 using a BiCOM 2 process.

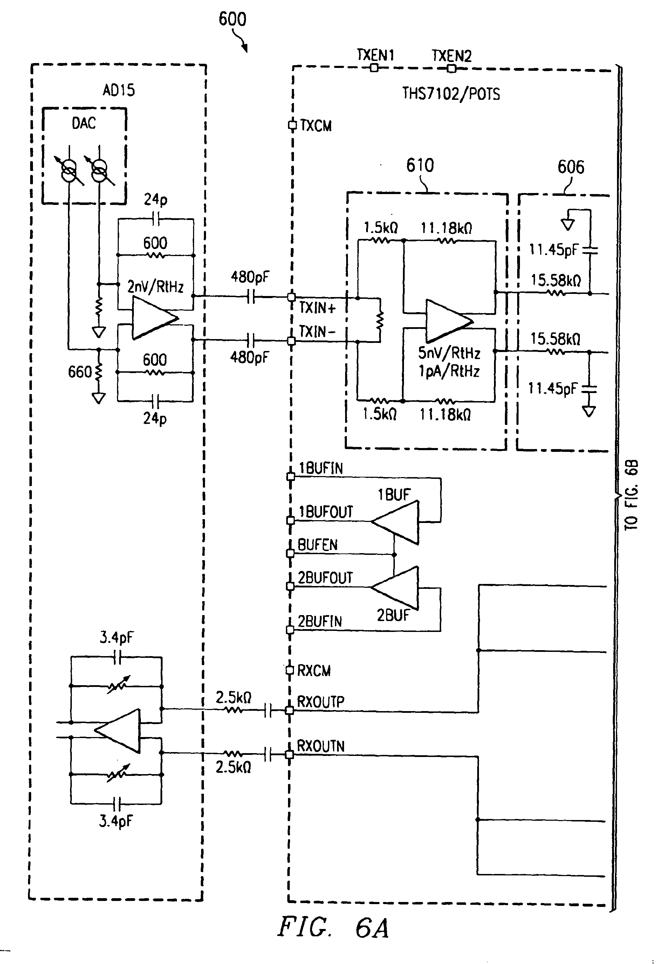

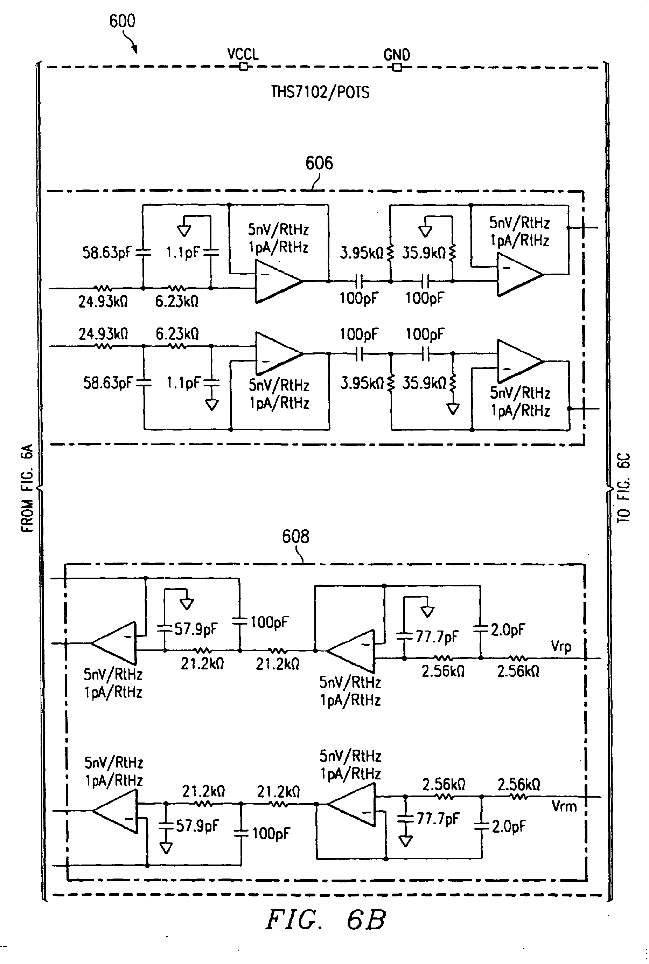

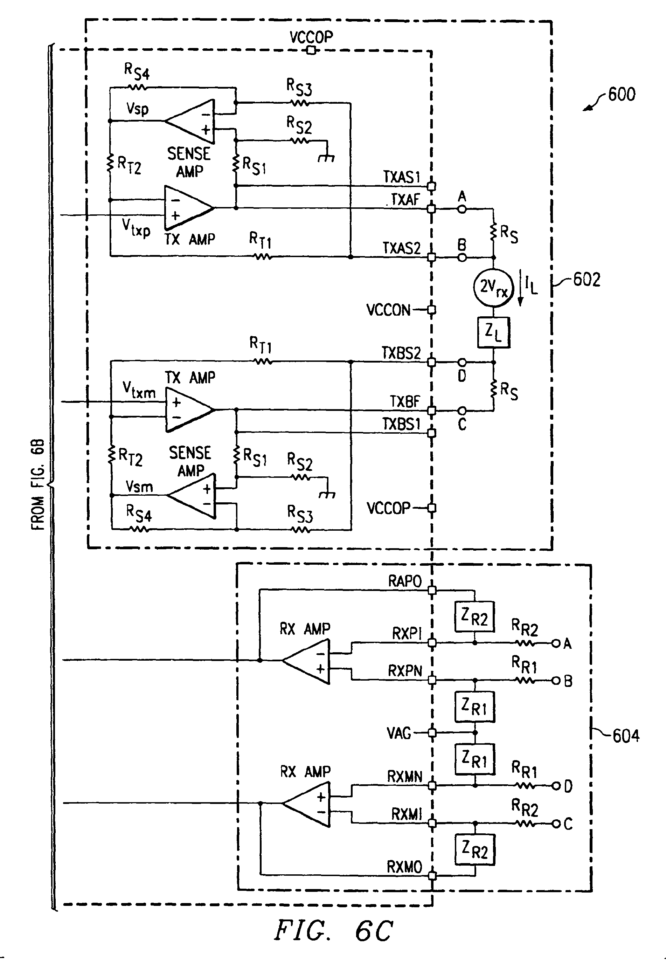

Figure 6 is a block diagram illustrating a realizable analog front end circuit (AFE) 600 that is partitioned according to the inventive principles presented herein above. The AFE 600 can be seen to include line driver 602, receiver amplifier 604, analog receive filter 608, analog transmitter filter 610 and transmitter gain circuit 610.

In view of the above, it can be seen the present invention presents a significant advancement in the art of ADSL analog front end technology. Further, this invention has been described in considerable detail in order to provide those skilled in the data communication art with the information needed to apply the novel principles and to construct and use such specialized components as are required. In view of the foregoing descriptions, it should further be apparent that the present invention represents a significant departure from the prior art in construction and operation. However, while particular examples of the present invention have been described herein in detail, it is to be understood that various alterations, modifications and substitutions can be made therein without departing in any way from the scope of the appended claims.

## Claims

1. A hybrid ADSL analog front end (500) comprising:
low-voltage mixed signal processing means (520) for digitally filtering and converting a digital host signal to an analog host signal and further for converting an analog subscriber loop signal to a digital subscriber loop signal and digitally filtering; and
high-voltage processing means (530) for filtering the analog host signal (502) and synthesizing a subscriber loop input impedance through which the filtered analog host signal can be transmitted to a subscriber loop and further for amplifying (508) and filtering (504) an analog signal received via the subscriber loop to generate the analog subscriber loop signal.

2. The hybrid ADSL analog front end according to claim 1 wherein the high-voltage processing means for filtering the analog host signal comprises an analog filter (502).

3. The hybrid ADSL analog front end according to claim 2 wherein the high-voltage processing means for filtering the analog signal received via the subscriber loop comprises an analog filter (504).

4. The hybrid ADSL analog front end according to claim 1 further comprising means for isolating (510) the low-voltage mixed signal processing means from the high-voltage processing means.

5. The hybrid ADSL analog front end according to claim 4 wherein the isolating means comprises an external resistor (510).

6. The hybrid ADSL analog front end according to claim 1 wherein the high-voltage processing means for synthesizing a subscriber loop input impedance comprises an active termination line driver circuit (506).

7. The hybrid ADSL analog front end according to claim 1 wherein the high-voltage processing means for amplifying an analog signal (508) received via the subscriber loop comprises a plurality of impedances and a differential amplifier in combination and adapted to achieve a high 4-wire echo return loss associated with a predetermined subscriber loop signal.

8. An ADSL analog front end (500) comprising:
a low-voltage mixed signal process (520) comprising a digital-to-analog converter (DAC), an analog-to-digital converter (ADC), an input digital filter, an output digital filter and an automatic gain control AGC (512), wherein the input digital filter is adapted to filter input signals received by the DAC, the output digital filter is adapted to filter output signals generated by the ADC, and the AGC is adapted to operate in response to an amplified and filtered received subscriber loop signal to generate an analog signal input to the ADC having a predetermined peak-to-peak value; and
a high-voltage process (530) comprising a transmitter gain portion, a transmitter analog filter (502), a transmitter line drive (506) a receiver amplifier (508) and a receive analog filter (504), wherein the transmitter gain portion is adapted to amplify an analog signal generated by the DAC, the transmitter analog filter (502) is adapted to filter a signal generated by the adapted transmitter gain portion and to generate a filtered transmitter signal therefrom, the transmitter line driver (506) is adapted to amplify or attenuate the filtered transmitter signal to achieve a desired ADSL characteristic, the receive amplifier is adapted to receive a subscriber loop signal to generate an amplified received subscriber loop signal therefrom, the receive analog filter (504) is adapted to filter the amplified received subscriber loop signal and to generate the amplified and filtered received subscriber loop signal.

9. The ADSL analog front end according to claim 8 further comprising an external isolation resistor (510) adapted to isolate the low-voltage mixed signal process (520) from the high-voltage process (530).

10. The ADSL analog front end according to claim 8 wherein the transmitter line driver (506) comprises an active termination line driver circuit.

11. The ADSL analog front end according to claim 8 wherein the receiver amplifier (508) comprises a plurality of passive impedance elements and a differential amplifier configured to achieve a high 4-wire echo return loss associated with the subscriber loop.

12. A monolithic ADSL analog front end (500) comprising:
a low-voltage mixed signal portion (520) including a first digital filter having an input and an output, a DAC having an output and an input in communication with the first digital filter output, a second digital filter having an input and an output, an ADC having input and an output in communication with the second digital filter input, and an AGC (512) having an input and an output in communication with the ADC input; and
a high-voltage portion (530) including a transmitter gain element having an output and an input in communication with the DAC output, a first analog filter (502) having an output and an input in communication with the transmitter gain element output, a line driver (506) having an output and an input in communication with the first analog filter (502) output, a receive amplifier (508) having an input and an output, and a second analog filter (504) having an output in communication with the AGC input and an input in communication with the receive amplifier (508) output.

13. The monolithic ADSL analog front end according to claim 12 wherein the AGC (512) comprises an external resistor (510) that is adapted to isolate the low-voltage mixed signal portion from the high-voltage portion.

14. The monolithic ADSL analog front end according to claim 12 wherein the line driver (506) comprises an active termination circuit.

15. The monolithic ADSL analog front end according to claim 12 wherein the receive amplifier (508) comprises a plurality of passive impedance elements and a differential amplifier configured to achieve a high 4-wire echo return loss associated with a predetermined subscriber loop.

16. A method of achieving a high 4-wire echo return loss in a monolithic ADSL analog front end (500) configured to interface a four-wire signal path to a bi-directional two-wire subscriber loop comprising the steps of:
digitally filtering a digital input signal via a low-voltage mixed signal process to generate a digitally filtered input signal;
converting via the low-voltage mixed signal process, the digitally filtered input signal to an analog signal;
amplifying the analog signal via a high-voltage process to generate an amplified analog signal;
analog filtering the amplified analog signal via an analog filter implemented in the high-voltage process;
synthesizing in the high-voltage process a desired ADSL input impedance; and
transmitting the amplified and analog filtered analog signal to predetermined ADSL via the synthesized ADSL input impedance.

17. The method according to claim 16 further comprising the step of amplifying via a high-voltage process impedance synthesizer, an input signal received from a predetermined ADSL to generate a signal having a high 4-wire echo return loss.

18. The method according to claim 17 further comprising the step of analog filtering in the high-voltage process, the signal having a high 4-wire echo return loss.

19. A method according to claim 18 further comprising the step of communicating the filtered signal having a high 4-wire echo return loss to the low-voltage mixed signal process via an isolation element.

20. The method according to claim 19 further comprising the step of amplifying in the low-voltage mixed signal process, the filtered signal having a high 4-wire echo return loss.

21. The method according to claim 20 further comprising the step converting to a digital signal in the low-voltage mixed signal process, the amplified signal having a high 4-wire echo return loss.

22. The method according to claim 21 further comprising the step of digitally filtering in the low-voltage mixed signal process, the digital signal converted from the amplified signal having a high 4-wire echo return loss.

23. The method according to claim 22 further comprising the step of communicating to a host processor, the digitally filtered signal converted from the amplified signal having a high 4-wire echo return loss.

## Patentansprüche

1. Analoges Hybrid-ADSL-Front-End (500), mit:
Niederspannungs-Mischsignal-Verarbeitungsmitteln (520) zum digitalen Filtern und Umsetzen eines digitalen Host-Signals in ein analoges Host-Signal und ferner zum Umsetzen eines analogen Teilnehmerschleifensignals in ein digitales Teilnehmerschleifensignal und zum digitalen Filtern; und
Hochspannungsverarbeitungsmitteln (530) zum Filtern des analogen Host-Signals (502) und zum Synthetisieren einer Teilnehmerschleifen-Eingangsimpedanz, durch die das gefilterte analoge Host-Signal an eine Teilnehmerschleife übertragen werden kann, und ferner zum Verstärken (508) und Filtern (504) eines analogen Signals, das über die Teilnehmerschleife empfangen wird, um das analoge Teilnehmerschleifensignal zu erzeugen.

2. Analoges Hybrid-ADSL-Front-End nach Anspruch 1, bei dem die Hochspannungsverarbeitungsmittel zum Filtern des analogen Host-Signals ein analoges Filter (502) umfassen.

3. Analoges Hybrid-ADSL-Front-End nach Anspruch 2, bei dem die Hochspannungsverarbeitungsmittel zum Filtern des analogen Signals, das über die Teilnehmerschleife empfangen wird, ein analoges Filter (504) umfassen.

4. Analoges Hybrid-ADSL-Front-End nach Anspruch 1, das ferner Mittel umfasst, um die Niederspannungs-Mischsignal-Verarbeitungsmittel von den Hochspannungsverarbeitungsmitteln zu isolieren (510).

5. Analoges Hybrid-ADSL-Front-End nach Anspruch 4, bei dem die Isolationsmittel einen externen Widerstand (510) umfassen.

6. Analoges Hybrid-ADSL-Front-End nach Anspruch 1, bei dem die Hochspannungsverarbeitungsmittel zum Synthetisieren einer Teilnehmerschleifen-Eingangsimpedanz eine aktive Abschlussleitungs-Treiberschaltung (506) umfassen.

7. Analoges Hybrid-ADSL-Front-End nach Anspruch 1, bei dem die Hochspannungsverarbeitungsmittel zum Verstärken eines analogen Signals (508), das über die Teilnehmerschleife empfangen wird, in Kombination mehrere Impedanzen und einen Differenzverstärker umfassen und so beschaffen sind, dass sie einen hohen Vierdraht-Echorückkehrverlust, der einem vorgegebenen Teilnehmerschleifensignal zugeordnet ist, erzielen.

8. Analoges ADSL-Front-End (500), mit:
einem Niederspannungs-Mischsignal-Prozess (520), der einen Digital/Analog-Umsetzer (DAC), einen Analog/Digital-Umsetzer (ADC), ein digitales Eingangsfilter, ein digitales Ausgangsfilter und eine automatische Verstärkungssteuerung AGC (512) umfasst, wobei das digitale Eingangsfilter so beschaffen ist, dass es Eingangssignale, die von dem DAC empfangen werden, filtert, das digitale Ausgangsfilter so beschaffen ist, dass es Ausgangssignale, die von dem ADC erzeugt werden, filtert, und die AGC so beschaffen ist, dass sie in Reaktion auf ein verstärktes und gefiltertes empfangenes Teilnehmerschleifensignal einen analogen Signaleingang für die ADC mit einem vorgegebenen Spitzen-Spitzen-Wert erzeugt; und
einem Hochspannungsprozess (530), der einen Senderverstärkungsabschnitt, ein analoges Senderfilter (502), einen Senderleitungstreiber (506), einen Empfängerverstärker (508) und ein analoges Empfangsfilter (504) umfasst, wobei der Senderverstärkerabschnitt so beschaffen ist, dass er ein durch den DAC erzeugtes analoges Signal verstärkt, das analoge Senderfilter (502) so beschaffen ist, dass es ein durch den Senderverstärkungsabschnitt erzeugtes Signal filtert, um hieraus ein gefiltertes Sendersignal zu erzeugen, der Senderleitungstreiber (506) so beschaffen ist, dass er das gefilterte Sendersignal verstärkt oder dämpft, um die gewünschte ADSL-Charakteristik zu erzielen, der Empfängerverstärker so beschaffen ist, dass er ein Teilnehmerschleifensignal empfängt, um hieraus ein verstärktes empfangenes Teilnehmerschleifensignal zu erzeugen, und das analoge Empfangsfilter (504) so beschaffen ist, dass es das verstärkte empfangene Teilnehmerschleifensignal filtert und das verstärkte und gefilterte empfangene Teilnehmerschleifensignal erzeugt.

9. Analoges ADSL-Front-End nach Anspruch 8, das ferner einen externen Isolationswiderstand (510) aufweist, der so beschaffen ist, dass er den Niederspannungs-Mischsignal-Prozess (520) von dem Hochspannungsprozess (530) isoliert.

10. Analoges ADSL-Front-End nach Anspruch 8, bei dem der Senderleitungstreiber (506) eine aktive Abschlussleitungs-Treiberschaltung umfasst.

11. Analoges ADSL-Front-End nach Anspruch 8, bei dem der Empfängerverstärker (508) mehrere passive Impedanzelemente und einen Differenzverstärker, der so konfiguriert ist, dass er einen hohen Vierdraht-Echorückkehrverlust erzielt, der der Teilnehmerschleife zugeordnet ist, umfasst.

12. Monolithisches analoges ADSL-Front-End (500), mit:
einem Niederspannungs-Mischsignal-Abschnitt (520), der ein erstes digitales Filter mit einem Eingang und einem Ausgang, einem DAC mit einem Ausgang und einem Eingang, der mit dem Ausgang des ersten digitalen Filters kommuniziert, ein zweites digitales Filter mit einem Eingang und einem Ausgang, einen ADC mit einem Eingang und einem Ausgang, der mit dem Eingang des zweiten digitalen Filters kommuniziert, und eine AGC (512) mit einem Eingang und einem Ausgang, der mit dem ADC-Eingang kommuniziert, umfasst; und
einem Hochspannungsabschnitt (530), der ein Senderverstärkungselement mit einem Ausgang und einem Eingang, der mit dem DAC-Ausgang kommuniziert, ein erstes analoges Filter (520) mit einem Ausgang und einem Eingang, der mit dem Ausgang des Senderverstärkungselements kommuniziert, einen Leitungstreiber (506) mit einem Ausgang und einem Eingang, der mit dem Ausgang des ersten analogen Filters (502) kommuniziert, einen Empfängerverstärker (508) mit einem Eingang und einem Ausgang und ein zweites analoges Filter (504) mit einem Ausgang, der mit dem AGC-Eingang kommuniziert und einem Eingang, der mit dem Ausgang des Empfängerverstärkers (508) kommuniziert, umfasst.

13. Monolithisches analoges ADSL-Front-End nach Anspruch 12, bei dem die AGC (512) einen externen Widerstand (510) umfasst, der so beschaffen ist, dass er den Niederspannungs-Mischsignal-Abschnitt von dem Hochspannungsabschnitt isoliert.

14. Monolithisches analoges ADSL-Front-End nach Anspruch 12, bei dem der Leitungstreiber (506) eine aktive Abschlussschaltung umfasst.

15. Monolithisches analoges ADSL-Front-End nach Anspruch 12, bei dem der Empfängerverstärker (508) mehrere passive Impedanzelemente und einen Differenzverstärker, der so konfiguriert ist, dass er einen hohen Vierdraht-Echorückkehrverlust, der einer vorgegebenen Teilnehmerschleife zugeordnet ist, erzielt, umfasst.

16. Verfahren zum Erzielen eines hohen Vierdraht-Echorückkehrverlusts in einem monolithischen analogen ADSL-Front-End (500), das so konfiguriert ist, dass es eine Schnittstelle zwischen einem Vierdraht-Signalweg und einer bidirektionalen Zweidraht-Teilnehmerschleife bildet, das die folgenden Schritte umfasst:
digitales Filtern eines digitalen Eingangssignals über einen Niederspannungs-Mischsignal-Prozess, um ein digital gefiltertes Eingangssignal zu erzeugen;
Umsetzen des digital gefilterten Eingangssignals in ein analoges Signal mittels des Niederspannungs-Mischsignal-Prozesses;
Verstärken des analogen Signals mittels eines Hochspannungsprozesses, um ein verstärktes analoges Signal zu erzeugen;
analoges Filtern des verstärkten analogen Signals mittels eines analogen Filters, das in den Hochspannungsprozess implementiert ist;
Synthetisieren einer Soll-ADSL-Eingangsimpedanz in dem Hochspannungsprozess; und
Senden des verstärkten und analog gefilterten analogen Signals zu einer vorgegebenen ADSL über die synthetisierte ADSL-Eingangsimpedanz.

17. Verfahren nach Anspruch 16, das ferner den Schritt des Verstärkens eines von einer vorgegebenen ADSL empfangenen Eingangssignals mittels eines Hochspannungsprozess-Impedanzsynthetisierers umfasst, um ein Signal mit einem hohen Vierdraht-Echorückkehrverlust zu erzeugen.

18. Verfahren nach Anspruch 17, das ferner den Schritt des analogen Filterns in dem Hochspannungsprozess des Signals mit einem hohen Vierdraht-Echorückkehrverlust umfasst.

19. Verfahren nach Anspruch 18, das ferner den Schritt des Kommunizierens des gefilterten Signals mit einem hohen Vierdraht-Echorückkehrverlust zu dem Niederspannungs-Mischsignal-Prozess über ein Isolationselement umfasst.

20. Verfahren nach Anspruch 19, das ferner den Schritt des Verstärkens des gefilterten Signals mit einem hohen Vierdraht-Echorückkehrverlust in dem Niederspannungs-Mischsignal-Prozess umfasst.

21. Verfahren nach Anspruch 20, das ferner den Schritt des Umsetzens des verstärkten Signals mit einem hohen Vierdraht-Echorückkehrverlust in ein digitales Signal in dem Niederspannungs-Mischsignal-Prozess umfasst.

22. Verfahren nach Anspruch 21, das ferner den Schritt des digitalen Filterns des aus dem verstärkten Signal mit einem hohen Vierdraht-Echorückkehrverlust umgesetzten digitalen Signals in dem Niederspannungs-Mischsignal-Prozess umfasst.

23. Verfahren nach Anspruch 22, das ferner den Schritt des Kommunizierens des digital gefilterten Signals, das aus dem verstärkten Signal mit einem hohen Vierdraht-Echorückkehrverlust umgesetzt worden ist, zu einem Host-Prozessor umfasst.

## Revendications

1. Dispositif d'extrémité frontal analogique hybride pour ADSL (500) comprenant :
un moyen de traitement de signal mixte basse tension (520) pour filtrer numériquement et convertir un signal hôte numérique en un signal hôte analogique et en outre pour convertir un signal de boucle d'abonné analogique en un signal de boucle d'abonné numérique et pour un filtrage numérique; et
un moyen de traitement haute tension (530) pour filtrer le signal analogique (502) et synthétiser une impédance d'entrée de boucle d'abonné via laquelle le signal hôte analogique filtré peut être transmis à une boucle d'abonné et en outre pour amplifier 508 et filtrer 504 un signal analogique reçu via la boucle d'abonné pour générer le signal de boucle d'abonné analogique.

2. Dispositif d'extrémité frontal analogique hybride pour ADSL selon la revendication 1 où le moyen de traitement haute tension pour filtrer le signal hôte analogique comprend un filtre analogique (502).

3. Dispositif d'extrémité frontal analogique hybride pour ADSL selon la revendication 2 où le moyen de traitement haute tension pour filtrer le signal analogique reçu via la boucle d'abonné comprend un filtre analogique (504).

4. Dispositif d'extrémité frontal analogique hybride pour ADSL selon la revendication 1 comprenant en outre un moyen pour isoler (510) le moyen de traitement de signal mixte basse tension du moyen de traitement haute tension.

5. Dispositif d'extrémité frontal analogique hybride pour ADSL selon la revendication 4 où le moyen d'isolation comprend une résistance externe (510).

6. Dispositif d'extrémité frontal analogique hybride pour ADSL selon la revendication 1 où le moyen de traitement haute tension pour synthétiser une impédance d'entrée de boucle d'abonné comprend un circuit d'attaque de ligne à terminaison active (506).

7. Dispositif d'extrémité frontal analogique hybride pour ADSL selon la revendication 1 où le moyen de traitement haute tension pour amplifier un signal analogique (508) reçu via la boucle d'abonné comprend une pluralité d'impédances et un amplificateur différentiel en combinaison et adapté pour obtenir un affaiblissement d'écho 4 fils élevé associé à un signal de boucle d'abonné prédéfini.

8. Dispositif d'extrémité frontal analogique pour ADSL (500) comprenant :
un traitement de signal mixte basse tension (520) comprenant un convertisseur numérique-analogique (CNA), un convertisseur analogique-numérique (CAN), un filtre numérique d'entrée, un filtre numérique de sortie et un contrôle automatique de gain (AGC) (512), où le filtre numérique d'entrée est adapté pour filtrer des signaux d'entrée reçus par le CNA, le filtre numérique de sortie est adapté pour filtrer des signaux de sortie générés par le CAN, et l'AGC est adapté pour fonctionner en réponse à un signal de boucle d'abonné reçu amplifié et filtré pour générer une entrée de signal analogique vers le CAN possédant une valeur crête à crête prédéterminée ; et
un processus haute tension (530) comprenant une partie de gain d'émetteur, un filtre analogique d'émetteur (502), un circuit d'attaque de ligne d'émetteur (506), un amplificateur de récepteur (508) et un filtre analogique de récepteur (504), où la partie de gain d'émetteur est adaptée pour amplifier un signal analogique généré par le CNA, le filtre analogique d'émetteur (502) est adapté pour filtrer un signal généré par la partie de gain d'émetteur et pour ainsi générer un signal d'émetteur filtré, le circuit d'attaque de ligne d'émetteur (506) est adapté pour amplifier ou atténuer le signal d'émetteur filtré pour obtenir une caractéristique ADSL souhaitée, l'amplificateur de récepteur est adapté pour recevoir un signal de boucle d'abonné pour ainsi générer un signal de boucle d'abonné reçu amplifié, le filtre analogique de récepteur 504 est adapté pour filtrer le signal de boucle d'abonné reçu amplifié et pour générer le signal de boucle d'abonné reçu amplifié et filtré.

9. Dispositif d'extrémité frontal analogique pour ADSL selon la revendication 8, comprenant en outre une résistance d'isolation externe (510) adaptée pour isoler le processus de signal mixte basse tension (520) du processus haute tension.

10. Dispositif d'extrémité frontal analogique pour ADSL selon la revendication 8, où le circuit d'attaque de ligne d'émetteur (506) comprend un circuit d'attaque de ligne à terminaison active.

11. Dispositif d'extrémité frontal analogique pour ADSL selon la revendication 8, où l'amplificateur de récepteur (508) comprend une pluralité d'éléments d'impédance passifs et un amplificateur différentiel configuré pour obtenir un affaiblissement d'écho 4 fils élevé associé à la boucle d'abonné.

12. Dispositif d'extrémité frontal analogique monolithique pour ADSL (500) comprenant :
une partie de signal mixte basse tension (520) incluant un premier filtre numérique possédant une entrée et une sortie, un CNA possédant une sortie et une entrée en communication avec la sortie du premier filtre numérique, un deuxième filtre numérique possédant une entrée et une sortie, un CAN possédant une entrée et une sortie en communication avec l'entrée du deuxième filtre numérique, et un AGC (512) possédant une entrée et une sortie en communication avec l'entrée du CAN ; et
une partie haute tension (530) incluant un élément de gain d'émetteur possédant une sortie et une entrée en communication avec la sortie du CNA, un premier filtre analogique (502) possédant une sortie et une entrée en communication avec la sortie d'élément de gain d'émetteur, un circuit d'attaque de ligne (506) possédant une sortie et une entrée en communication avec la sortie du premier filtre analogique (502), un amplificateur de récepteur (508) possédant une entrée et une sortie, et un deuxième filtre analogique (504) possédant une sortie en communication avec l'entrée de l'AGC et une entrée en communication avec la sortie de l'amplificateur de récepteur 508.

13. Dispositif d'extrémité frontal analogique monolithique pour ADSL selon la revendication 12 où l'AGC (512) comprend une résistance externe (510) qui est adaptée pour isoler la partie de signal mixte basse tension de la partie haute tension.

14. Dispositif d'extrémité frontal analogique monolithique pour ADSL selon la revendication 12 où le circuit d'attaque de ligne (506) comprend un circuit à terminaison active.

15. Dispositif d'extrémité frontal analogique monolithique pour ADSL selon la revendication 12 où l'amplificateur de récepteur (508) comprend une pluralité d'éléments d'impédance passifs et un amplificateur différentiel configuré pour obtenir un affaiblissement d'écho 4 fils élevé associé à une boucle d'abonné prédéterminée.

16. Procédé pour obtenir un affaiblissement d'écho 4 fils élevé dans un dispositif d'extrémité frontal analogique monolithique pour ADSL configuré pour interfacer un chemin de signal quatre fils vers une boucle d'abonné deux fils bidirectionnelle comprenant les étapes suivantes :
filtrer numériquement un signal d'entrée numérique via un processus de signal mixte basse tension pour générer un signal d'entrée filtré numériquement ;
convertir, via le processus de signal mixte basse tension, le signal d'entrée filtré numériquement en un signal analogique ;
amplifier le signal analogique via un processus haute tension pour générer un signal analogique amplifié ;
filtrer de façon analogique le signal analogique amplifié via un filtre analogique implémenté dans le processus haute tension ;
synthétiser dans le processus haute tension une impédance d'entrée ADSL souhaitée ; et
transmettre le signal analogique amplifié et filtré de façon analogique à la ligne ADSL prédéterminée via l'impédance d'entrée ADSL synthétisée.

17. Procédé selon la revendication 16 comprenant en outre l'étape d'amplification, via un synthétiseur d'impédance de processus haute tension, d'un signal d'entrée reçu d'une ligne ADSL prédéterminée pour générer un signal présentant un affaiblissement d'écho 4-fils élevé.

18. Procédé selon la revendication 17 comprenant en outre l'étape de filtrage analogique, dans le processus haute tension, du signal présentant un affaiblissement d'écho 4-fils élevé.

19. Procédé selon la revendication 18 comprenant en outre l'étape de communication du signal filtré présentant un affaiblissement d'écho 4 fils élevé au processus de signal mixte basse tension via un élément d'isolation.

20. Procédé selon la revendication 19 comprenant en outre l'étape d'amplification, dans le processus de signal mixte basse tension, du signal filtré présentant un affaiblissement d'écho 4 fils élevé.

21. Procédé selon la revendication 20 comprenant en outre l'étape de conversion en un signal numérique, dans le processus de signal mixte basse tension, du signal amplifié présentant un affaiblissement d'écho 4 fils élevé.

22. Procédé selon la revendication 21 comprenant en outre l'étape de filtrage numérique, dans le processus de signal mixte basse tension, du signal numérique converti à partir du signal amplifié présentant un affaiblissement d'écho 4 fils élevé.

23. Procédé selon la revendication 22 comprenant en outre l'étape de communication à un processeur hôte du signal filtré numériquement converti à partir du signal amplifié présentant un affaiblissement d'écho 4 fils élevé.
